# EUROPÄISCHE PATENTANMELDUNG

(11) **EP 3 146 844 A1**
(43) Veröffentlichungstag der Anmeldung: **29.03.2017**
(21) Anmeldenummer: 16187513.3
(22) Anmeldetag: 06.09.2016
(51) Int. Cl.: A21C 5/00, A21B 5/03

(54) **TEIGVERTEILUNGSVORRICHTUNG ZUM FLÄCHIGEN VERTEILEN EINER TEIGMENGE AUF EINER BRATFLÄCHE**

(30) Priorität: 15.09.2015 DE 102015011757
(71) Anmelder: HOJA Maschinenbau-Metallbau GmbH, 29690 Schwarmstedt (DE)
(72) Erfinder: Hoja, Heinz-Helmut, 29690 Schwarmstedt (DE); Hoja, Jörg, 29690 Schwarmsteddt (DE)
(74) Vertreter: Holz, Christian

(57) **Zusammenfassung**

Die vorliegende Erfindung betrifft eine Teigverteilungsvorrichtung (4) zum flächigen Verteilen einer Teigmenge auf einer Bratfläche (30) mit wenigstens einer Luftdüsenvorrichtung (5) mit wenigstens einer ersten Luftdüse (57), welche auf die zu verteilende Teigmenge hin ausgerichtet werden und die zu verteilende Teigmenge mittels eines Luftstroms flächig auf der Bratfläche (30) verteilen kann. Die Teigverteilungsvorrichtung (4) ist dadurch gekennzeichnet, dass die erste Luftdüse (57) gegenüber einem Gestell (40) der Teigverteilungsvorrichtung (4) um eine Drehachse (F) drehbar derart bewegt werden kann, so dass die zu verteilende Teigmenge mittels der ersten Luftdüse (57) rundflächig auf der Bratfläche (30) verteilt werden kann.

## Beschreibung

Die vorliegende Erfindung betrifft eine Teigverteilungsvorrichtung zum flächigen Verteilen einer Teigmenge auf einer Bratfläche gemäß des Oberbegriffs des Anspruchs 1, eine Bratanlage mit einer derartigen Teigverteilungsvorrichtung gemäß des Anspruchs 12 sowie ein Verfahren unter Verwendung einer derartigen Teigverteilungsvorrichtung gemäß des Anspruchs 14.

Es ist heutzutage üblich, Lebensmittel z.B. im Supermarkt in vorzubereiteter Form zu kaufen, so dass der Zubereitungsaufwand Zuhause reduziert werden kann. Hierzu gehören auch Lebensmittel, die herstellerseitig bereits fertig gekocht, gebraten oder gebacken wurden, so dass diese Lebensmittel Zuhause lediglich noch einmal erwärmt werden müssen oder direkt gegessen werden können. Zu diesen vorgebackenen bzw. vorgebratenen Lebensmitteln gehören auch dünne runde Teigwaren wie z.B. Pfannkuchen, Crepes oder Blinis.

Seitens der Fa. SDTN ist zur Herstellung von dünnen runden Teigwaren eine Vorrichtung bekannt, die eine ringförmig geschlossene und sich drehende Bratfläche aufweist. Auf die Bratfläche wird der zu bratende Teig von oben mittels mehrerer Portionierköpfe, die radial nebeneinander versetzt angeordnet sind, aufgegeben. Dabei ist jeder Portionierkopf entsprechend der Form der herzustellenden Teigware kreisrund ausgebildet und weist eine Vielzahl von Teigdüsen auf, so dass die herzustellenden Teigwaren direkt in ihrer kreisrunden Form auf der Bratfläche aufgebracht werden können. Eine weitere Formgebung findet nicht statt. Vorteilhaft ist hierbei, dass diese Vorrichtung recht einfach gereinigt und jederzeit angehalten werden kann.

Nachteilig ist jedoch, dass die auf die Bratfläche aufportionierten Teigmengen ineinander verlaufen können. Nachteilig ist ferner, dass auf diese Weise lediglich Teigwaren mit einer Dicke bzw. Höhe hergestellt werden können, welche durch die Oberflächenspannung des Teigs bestimmt wird. Da ein üblicher Teig für z.B. Pfannkuchen, Crepes oder Blinis aufgrund seiner Rezeptur eine eher dickflüssige Konsistenz aufweist, führt dies zu einer Dicke, welche z.B. für Pfannkuchen als angemessen, jedoch für z.B. Crepes oder Blinis als zu dick empfunden werden kann. Somit kann diese Vorrichtung für die Herstellung von dünnen runden Teigwaren wie z.B. Pfannkuchen geeignet sein, jedoch nicht für die Herstellung von dünnen runden Teigwaren wie z.B. Crepes oder Blinis, welche deutlich dünner als Pfannkuchen sind.

Von der Fa. SDTN ist ferner eine Vorrichtung zur Herstellung von dünnen runden Teigwaren bekannt, bei der die Portionierköpfe als Teigbehälter ausgebildet sind, welche von oben kontinuierlich mit Teig befüllt werden. Nach unten sind die Teigbehälter offen und der im Teigbehälter aufgenommene Teig steht durchgehend mit der Bratfläche in Kontakt, so dass durch die Drehung der Bratfläche ein kontinuierlicher Teig gebacken wird. Um z.B. eine runde, quadratische oder sonstige Form der Teigwaren zu erhalten, sind die Teigbehälter gegenüber der Bratfläche als senkrecht zur Drehrichtung der Bratfläche bewegliche Schieber ausgebildet, so dass die Teigbehälter gegenüber der Bratfläche geöffnet und geschlossen werden können. Durch diese Öffnungs- und Schließbewegung kann der Kontakt zwischen dem im Teigbehälter aufgenommenen Teig und der Bratfläche derart gesteuert werden, dass sich fortlaufend z.B. runde Teigwagen auf der Bratfläche ausbilden, die in Drehrichtung jedoch durch einen schmalen Teigstreifen miteinander verbunden sind.

Vorteilhaft ist hierbei, dass die Dicke durch den Abstand zwischen der unteren Kante des Teigbehälters bzw. Schiebers und der Bratfläche dünner eingestellt werden kann als die Dicke, die sich aus der Oberflächenspannung des aufgegebenen Teigs ergeben würde. Auf diese Weise können dünne runde Teigwaren hergestellt werden, welche aufgrund ihrer geringen Dicke als Crepes oder Blinis bezeichnet werden können.

Nachteilig ist jedoch, dass durch den durchgängigen Kontakt des Teigs mit der Bratfläche die gebackenen Teigwaren zusammenhängen und in einem weiteren Herstellungsschritt voneinander getrennt werden müssen. Hierdurch kann an dieser Stelle jedoch die runde Form der einzelnen Teigwaren gestört werden. Ferner ist diese Vorrichtung aufgrund des Teigbehälters sehr aufwendig in der Reinigung. Auch erfordert das Öffnen und Schließen der Schieber eine sehr genaue und sehr empfindliche Mechanik, um mittels der Bewegung des Schiebers quer zur Bewegungsrichtung der Bratfläche die runde Form der gebackenen Teigwaren zu erhalten. Dies kann die Anschaffung und Wartung der Vorrichtung teuer werden lassen. Nachteilig ist ferner, dass bei einem Produktionsstop der Teigbehälter sofort von der Bratfläche entfernt werden muss, da sonst der sich in dem Teigbehälter befindliche und mit der Bratfläche in Kontakt stehende Teig sofort stocken und den unteren Auslass des Teigbehälters blockiert würde. Dies könnte eine komplette Reinigung des Teigbehälters erforderlich machen, was zu einem Produktionsausfall führen würde. Auch ist die Qualität der gebackenen Teigwaren bei diesem Verfahren sehr temperatur- und teigmischungsanhängig, was das Verfahren aufwendig machen kann.

Ganz besonders nachteilig ist hierbei, dass diese Vorrichtung aufgrund des erforderlichen Bewegungsfreiraums in der Breite, d.h. quer zur Bewegungsrichtung der Bratfläche, lediglich einbahnig eingesetzt werden kann. Mit anderen Worten lassen sich auf der Bratfläche nicht mehrere Bahnen von zu bratenden Teigwaren herstellen, weil die Konstruktion des sich öffnenden und schließenden Schiebers seitlich zu viel Platz einnimmt und keine weiteren identischen Vorrichtungen neben sich zulässt. Dies schränkt die Produktionsmöglichkeiten erheblich gegenüber Vorrichtungen ein, welche z.B. drei Bahnen von zu bratenden Teigwaren parallel zueinander herstellen können.

Die WO 82/00080 A1 bzw. die DE 31 52 163 T1 betrifft ein Verfahren sowie eine Vorrichtung zur Verteilung einer pastenartigen Mischung als gleichmäßig dicke Schicht am oberen Trum eines endlosen Riemens, welcher die verteilte pastenartige Mischung durch einen Ofen hindurchführt, um darin gebacken zu werden. Hierzu wird in einer Zone, die vor dem Ofen liegt, die Oberseite des Riementrums mit der pastenartigen Mischung in Berührung gebracht. Mittels einer Wärmequelle, welche unter dem oberen Trum des Riemens angeordnet ist, wird die pastenartige Mischung in dieser Zone erwärmt, so dass die pastenartige Mischung koaguliert und auf diese Weise eine Schicht spezifischer Dicke auf dem Riemen anhaftet. Die Dicke dieser Teigschicht hängt von der koagulierten Menge der pastenartigen Mischung ab. Auf diese Weise kann die Dicke der Teigschicht durch die Zeitdauer, während der in einem gewissen Bereich des Riemens eine Koagulierung zugelassen wird, variiert werden. Die genannte Zeitdauer kann auch durch die Änderung der Riemen-Fördergeschwindigkeit variiert werden. Ferner kann die Temperatur der Wärmequelle zur Veränderung der Schichtdicke verändert werden.

Nachteilig hierbei ist, dass durch dieses Verfahren lediglich ein durchgängiger Teig ausgebildet werden kann, welcher sich auch über eine konstante Breite des Riemens erstreckt. Mit anderen Worten ist eine Ausbildung von einzelnen, d.h. nichtzusammenhängenden Teigwaren, mittels dieses Verfahrens nicht möglich, schon gar nicht als runde Teigwaren. Ferner kann dieses Verfahren lediglich auf einen Riemen angewendet werden, welcher von unten für eine Wärmequelle zugänglich ist, die lediglich in einem bestimmten Bereich des Riemens wirken können soll. Daher ist dieses Verfahren nicht auf eine Vorrichtung anwendbar, welche eine Bratfläche aufweist. Eine Bratfläche wie z.B. eine metallische und insbesondere eine gusseiserne Bratfläche zu verwenden ist jedoch für die Qualität der hergestellten Teigwaren sehr entscheidend, weil ein Riemen nie denselben schnellen Wärmeübergang wie eine Metallbratfläche bieten kann und sich damit die Produkteigenschaften nachteilig verändern würden.

Eine Aufgabe der vorliegenden Erfindung ist es, eine Teigverteilungsvorrichtung zum flächigen Verteilen einer Teigmenge auf einer Bratfläche der eingangs beschriebenen Art bereit zu stellen, sodass Teigwaren mit einer vorbestimmten vergleichsweise geringen Dicke, d.h. vergleichsweise dünn, insbesondere als runde dünne Teigwaren wie z.B. Crepes oder Blinis, einfach automatisiert hergestellt werden können. Die entsprechende Vorrichtung soll insbesondere einfach aufgebaut und bzw. oder einfach und schnell zu reinigen sein. Zumindest soll eine Alternative zu bekannten Vorrichtungen bereitgestellt werden.

Die Aufgabe wird erfindungsgemäß durch die Merkmale des kennzeichnenden Teils des Anspruchs 1, durch die Merkmale des Anspruchs 12 sowie durch die Merkmale des Anspruchs 14 gelöst. Vorteilhafte Weiterbildungen sind in den Unteransprüchen beschrieben.

Somit betrifft die vorliegende Erfindung eine Teigverteilungsvorrichtung zum flächigen Verteilen einer Teigmenge auf einer Bratfläche. Die Teigmenge kann durch eine separate Vorrichtung oder auch durch die Teigverteilungsvorrichtung selbst zuvor auf die Bratfläche aufgegeben worden sein. Die Bratfläche kann z.B. eine gusseiserne Bratfläche sein, welche von der gegenüberliegenden Unterseite z.B. mittels Gasflammen erwärmt werden kann. Die Bratfläche ist vorzugsweise beweglich, so dass eine kontinuierliche Herstellung von gebratenen Teigwaren stattfinden kann. Vorzugsweise ist die Bratfläche ringförmig geschlossen ausgebildet und dreht sich als Bestandteil einer Bratvorrichtung kontinuierlich im Kreis, so dass die Teigwaren über einen Teilabschnitt der Kreisbewegung wenigstens soweit fertiggebraten werden können, dass sie z.B. zur weiteren Verarbeitung von der Bratfläche entnommen werden können.

Die Teigverteilungsvorrichtung weist wenigstens eine Luftdüsenvorrichtung mit wenigstens einer ersten Luftdüse auf, welche auf die zu verteilende Teigmenge hin ausgerichtet werden und die zu verteilende Teigmenge mittels eines Luftstroms flächig auf der Bratfläche verteilen kann. Hierbei liegt der vorliegenden Erfindung die Erkenntnis zugrunde, dass ein flächiges Verteilen einer Teigmenge auf einer Bratfläche mittels eines Luftstroms, z.B. als Druckluft aus wenigstens einer Luftdüse, berührungslos erfolgen kann. Hierdurch kann ein Kontakt zu einem Verteilwerkzeug wie z.B. zu einem Verteilspachtel vermieden werden, so dass auch kein Verteilwerkzeug zu reinigen ist. Vorzugsweise kann die Kontur eines sonst üblichen Verteilspachtels durch den Luftstrom nachgeahmt werden, so dass eine vergleichbare oder sogar bessere Verteilwirkung erzielt werden kann, jedoch bei geringerem Reinigungsaufwand. Vorzugsweise wird gereinigte Luft verwendet.

Vorteilhaft ist auch, dass die Stärke des Luftdrucks derart hoch eingestellt werden kann, dass eine sehr starke Verteilwirkung erreicht werden kann, welche zu sehr dünn gebratenen Teigwaren führen kann, so wie es z.B. für Crepes und Blinis gewünscht ist. Vorteilhaft ist hierbei insbesondere, dass Blinis als umso besser angesehen werden, je dünner sie sind.

Diese geringere Dicke kann mittels eines entsprechend starken Luftstroms einfacher erreicht werden als mittels eines mechanischen Verteilspachtels, der obendrein noch zu reinigen wäre.

Dabei kann neben der Stärke des Luftdrucks die Stärke des Luftstroms gegenüber der zu verteilenden Teigmenge zusätzlich oder alternativ durch den Abstand zwischen erster Luftdüse und Bratfläche bzw. Oberseite der zu verteilenden Teigmenge sowie durch die Ausrichtung des Luftstroms gegenüber der Bratfläche bzw. Oberseite der zu verteilenden Teigmenge beeinflusst werden. Auch kann durch die Bewegungsgeschwindigkeit der ersten Luftdüse gegenüber der Bratfläche bzw. der zu verteilenden Teigmenge die Verteilung der Teigmenge beeinflusst werden. Ferner kann über die Teigmischung, die Back- bzw. Brattemperatur, die Menge und die Verteilung des Öls auf der Bratfläche etc. Einfluss hierauf genommen werden.

Die vorliegende Erfindung ist dadurch gekennzeichnet, dass die erste Luftdüse gegenüber einem Gestell der Teigverteilungsvorrichtung um eine Drehachse drehbar derart bewegt werden kann, so dass die zu verteilende Teigmenge mittels der ersten Luftdüse rundflächig auf der Bratfläche verteilt werden kann. Der vorliegenden Erfindung liegt der Gedanke zugrunde, dass durch eine Bewegung der ersten Luftdüse, d.h. des hierdurch erzeugten Luftstroms, über die zu verteilende Teigmenge hinweg diese über einen größeren Bereich der Bratfläche verteilt werden kann als bei einer fester Anordnung der ersten Luftdüse an einem Gestell. Mit anderen Worten kann die erste Luftdüse derart angeordnet und ausgerichtet werden, dass die zu verteilende Teigmenge durch den Luftstrom der ersten Luftdüse erfasst und wie durch einen Verteilspachtel verteilt werden kann, indem die Teigmenge vor dem Luftstrom hergeschoben werden kann. Auf diese Weise kann über die Anordnung und Ausrichtung der Luftdüse sowie über die Stärke des Luftstroms eine Teigverteilung erreicht werden, die eine möglichst glatte und gleichmäßige dünne Teigware erzeugen kann.

Vorzugsweise kann diese Bewegung als Drehbewegung ausgeführt werden, so dass über die Rotation der ersten Luftdüse über die zu verteilende Teigmenge hinweg eine Rundflächigkeit des verteilten Teigs ermöglicht wird. Mit anderen Worten kann der Luftstrom die zu verteilende Teigmenge erfassen und durch seine Drehbewegung wie ein Verteilspachtel strahlenförmig von der Mitte aus nach radial außen verteilen, bis die Teigmenge gleichmäßig ausgebreitet ist und sich eine runde Form des Teigs auf der Bratfläche ergeben hat. Auf diese Weise können runde Teigwaren wie z.B. Pfannkuchen, Crepes oder Blinis mittels der erfindungsgemäßen Teigverteilungsvorrichtung automatisiert hergestellt werden.

Vorzugsweise ist die Bewegungsgeschwindigkeit wie z.B. die Drehgeschwindigkeit der ersten Luftdüse über die Bratfläche einstellbar. Auf diese Weise kann die

Teigverteilungsvorrichtung für verschiedene Produkte unterschiedliche Geschwindigkeiten aufweisen, die während der Herstellung einer Produktart beibehalten werden können. Auch ist es möglich, die Bewegungsgeschwindigkeit während der Verteilung einer Teigmenge zu variieren, so dass z.B. anfangs eine geringere Geschwindigkeit gewählt werden kann, um die anfänglich höhere Teigmenge zuerst vorsichtig zu verteilen und hierdurch z.B. ein Spritzen des Teigs bei zu großer Bewegungsgeschwindigkeit zu vermeiden. Danach könnte die bereits flacher gewordene Teigmenge durch eine sich kontinuierlich steigernde Bewegungsgeschwindigkeit oder durch eine abrupt auf einen höheren Wert angehobene Bewegungsgeschwindigkeit weiter und schneller in der Fläche verteilt werden, um die gewünschte vorzugsweise sehr dünne Teigverteilung zu erreichen.

Vorteilhaft ist auch, dass über die Vorgabe der Bewegungsrichtung die Richtung der Teigverteilung einstellbar sein kann. Dies kann eine zusätzliche Möglichkeit zur Einflussnahme auf den Herstellungsprozess bieten.

Gemäß einem weiteren Aspekt der vorliegenden Erfindung kann die erste Luftdüse derart angeordnet, ausgerichtet und bzw. oder eingestellt werden, dass die Wirkung der Druckluft der ersten Luftdüse über die Drehachse der Luftdüsenvorrichtung im Wesentlichen radial hinausgehen kann. Auf diese Weise kann erreicht werden, dass die zu verteilende Teigmenge auch auf der Drehachse sicher durch den Luftstrom erfasst werden kann. Hierdurch kann auch an dieser Stelle eine glatte und gleichmäßige Verteilung des Teigs erreicht werden. Mit anderen Worten kann eine verbleibende Erhebung des Teigs in der Mitte, d.h. an der Stelle der Drehachse, vermieden werden.

Gemäß einem weiteren Aspekt der vorliegenden Erfindung ist die Stärke des Luftdrucks der ersten Luftdüse einstellbar. Hierzu kann der Luftstrom der ersten Luftdüse gesteuert oder geregelt werden. Auf diese Weise kann Einfluss auf die Teigverteilung genommen werden. Es kann die Teigverteilungsvorrichtung für verschiedene Produkte unterschiedlich starke Luftdrücke aufweisen, die während der Herstellung einer Produktart beibehalten werden können. Auch ist es möglich, die Stärke des Luftdrucks während der Verteilung einer Teigmenge zu variieren, so dass z.B. anfangs eine geringere Stärke des Luftstroms gewählt werden kann, um die anfänglich höhere Teigmenge zuerst vorsichtig zu verteilen und hierdurch z.B. ein Spritzen des Teigs bei zu großem Luftdruck zu vermeiden. Danach könnte die bereits flacher gewordene Teigmenge durch einen sich kontinuierlich steigernden Luftdruck oder durch einen abrupt auf einen höheren Wert angehobenen Luftdruck weiter in der Fläche verteilt werden, um die gewünschte vorzugsweise sehr dünne Teigverteilung zu erreichen. Auch kann hierzu am Ende des Verteilvorgangs ein höherer Luftdruck dadurch erforderlich sein, weil der Abstand des Teigs zu der ersten Luftdüse mit geringerer Höhe der verteilten Teigs zunimmt.

Gemäß einem weiteren Aspekt der vorliegenden Erfindung ist die erste Luftdüse gegenüber der Bratfläche in der Höhe einstellbar. Über den Abstand zwischen der ersten Luftdüse bzw. dessen Luftaustrittsöffnung(en) und der Bratfläche kann bei konstantem Luftdruck des Luftstroms die Stärke des Luftstroms, mit der dieser Luftstrom auf die zu verteilende Teigmenge wirken kann, beeinflusst werden. Auf diese Weise kann die Teigverteilungsvorrichtung für verschiedene Produkte unterschiedlich starke Luftdrücke durch unterschiedliche Höheneinstellungen der ersten Luftdüse aufweisen, die während der Herstellung einer Produktart beibehalten werden können. Ferner ist es aus den zuvor bereits beschriebenen Gründen auch möglich und vorteilhaft, die Stärke der Luftdruck während der Verteilung einer Teigmenge durch die Höheneinstellung der ersten Luftdüse zu variieren. Die dauerhafte Einstellung der Höhe kann z.B. mittels mechanischer Befestigungsmittel erfolgen, beispielsweise durch Schraubbefestigungen oder dergleichen. Eine auch während eines Verteilvorgangs variable Höheneinstellung kann z.B. über einen elektrischen oder pneumatischen Antrieb gesteuert oder geregelt erfolgen.

Gemäß einem weiteren Aspekt der vorliegenden Erfindung ist die erste Luftdüse gegenüber der Bratfläche um einen Winkel geneigt einstellbar. Dieser Winkel ist z.B. zwischen der ersten Luftdüse und der Senkrechten einstellbar, wobei die Senkrechte rechtwinkelig zur Bratfläche steht. Auf diese Weise kann erreicht werden, dass der Luftstrom nicht senkrecht von Oben auf die zu verteilende Teigmenge trifft sondern schräg. Dabei ist die erste Luftdüse vorzugsweise in Bewegungsrichtung geneigt, so dass der Luftstrom die zu verteilende Teigmenge wie ein Verteilspachtel vor sich herführen kann. Dieser Neigungswinkel kann für verschiedene Produkte unterschiedlich eingestellt sein und während der Herstellung einer Produktart beibehalten werden. Ferner ist es aus den zuvor bereits beschriebenen Gründen auch möglich und vorteilhaft, den Neigungswinkel während der Verteilung einer Teigmenge zu variieren. Die dauerhafte Einstellung des Neigungswinkels kann z.B. mittels mechanischer Befestigungsmittel erfolgen, beispielsweise durch Schrauben oder dergleichen. Eine auch während eines Verteilvorgangs variable Einstellung des Neigungswinkels kann z.B. über einen elektrischen oder pneumatischen Antrieb gesteuert oder geregelt erfolgen.

Gemäß einem weiteren Aspekt der vorliegenden Erfindung weist die erste Luftdüse eine Mehrzahl von Luftaustrittsöffnungen auf. Diese Luftaustrittsöffnungen können eine längliche Luftdüse ausbilden, welche sich im Wesentlichen quer zur Richtung erstrecken kann, in welcher die Teigmenge verteilt werden soll. Hierdurch kann eine Teigverteilung über eine größere Fläche erreicht werden. Dabei kann der Luftdruck der einzelnen Luftaustrittsöffnungen gleich oder unterschiedlich sein. Beispielsweise kann bei einer rotierenden ersten Luftdüse die radial innerste Luftaustrittsöffnung einen geringeren Druck aufweisen und die radial äußerste Luftaustrittsöffnung einen höheren Druck, weil die pro Luftaustrittsöffnung zu verteilende Teigmenge mit zunehmendem Radius ebenfalls steigen kann. Der Luftdruck einzelner oder aller Luftaustrittsöffnungen kann fest gewählt oder einstellbar sein, insbesondere gesteuert oder geregelt einstellbar während eines Herstellungsvorgangs einer Teigware, aus den zuvor beschriebenen Gründen. Vorzugsweise sind die Luftaustrittsöffnungen punktförmig als die Enden von Luftschläuchen ausgebildet. Dies kann den Vorteil einer einfachen und günstigen Umsetzung aufweisen.

Gemäß einem weiteren Aspekt der vorliegenden Erfindung weist die erste Luftdüse wenigstens eine schlitzartig ausgebildete Luftaustrittsöffnung auf. Diese schlitzartige Luftaustrittsöffnung kann über einen Abschnitt der ersten Luftdüse oder über die gesamte Länge der ersten Luftdüse als dessen einzige Luftaustrittsöffnung ausgebildet sein. Hierdurch kann eine besonders gleichmäßige Verteilung der Teigmenge erreicht werden, weil der Luftstrom über die Länge der schlitzartigen Luftaustrittsöffnung ununterbrochen ausgebildet werden kann. Bei einer rotierbaren ersten Luftdüse kann die schlitzartige Luftaustrittsöffnung im Wesentlichen in radialer Richtung ausgebildet sein.

Gemäß einem weiteren Aspekt der vorliegenden Erfindung weist die Luftdüsenvorrichtung wenigstens eine zweite Luftdüse auf, wobei die erste Luftdüse und die zweite Luftdüse identisch oder unterschiedlich angeordnet, ausgestaltet und bzw. oder einstellbar sein können. Auch können insgesamt drei oder mehr derartige Luftdüsen verwendet werden. Durch eine zweite Luftdüse kann die Größe der flächigen Verteilung bzw. die Schnelligkeit der Verteilung der Teigmenge entsprechend erhöht werden, wodurch die Produktion der Teigwaren beschleunigt werden kann. Dabei können die beiden Luftdüsen unterschiedliche Bereiche derselben Teigmenge verteilen oder gemeinsam dieselbe Teigmenge als Ganzes. Werden identische Luftdüsen zweifach vorgesehen, können durch die identische Ausgestaltung die Kosten der Anschaffung und bzw. oder der Wartung reduziert werden. Werden unterschiedliche Luftdüsen verwendet, so können die Einflussmöglichkeiten auf die Teigverteilung erhöht werden. Beispielsweise kann durch unterschiedlich hohe Luftdrücke der beiden Luftdüsen die Teigverteilung beeinflusst werden.

Gemäß einem weiteren Aspekt der vorliegenden Erfindung ist bzw. sind die erste Luftdüse und bzw. oder die zweite Luftdüse gegenüber der radialen Richtung der Drehachse der Luftdüsenvorrichtung um einen Winkel gedreht einstellbar. Auf diese Weise kann eine Winkelstellung der Luftdüse(n) gegenüber der radialen Richtung der Rotation um die Drehachse ermöglicht werden, welche weitere Einflussmöglichkeit auf die Teigverteilung bieten kann. Dabei können beide Winkel als Drehwinkel oder auch als Schwenkwinkel gleich oder unterschiedlich eingestellt sein. Auch kann bzw. können die Winkel konstant z.B. über mechanische Befestigungsmittel oder auch über Antriebe gesteuert oder geregelt flexibel einstellbar sein, z.B. um den bzw. die Winkel während der Herstellung einer Teigware zu verändern.

Gemäß einem weiteren Aspekt der vorliegenden Erfindung ist bzw. sind die erste Luftdüse und bzw. oder die zweite Luftdüse im radialen Abstand gegenüber der Drehachse der Luftdüsenvorrichtung einstellbar. Auch hierdurch kann eine Einflussmöglichkeit auf die Teigverteilung geschaffen werden. Beide Abstände können gleich oder unterschiedlich eingestellt sein. Auch kann der Abstand bzw. können die Abstände konstant z.B. über mechanische Befestigungsmittel oder auch über Antriebe gesteuert oder geregelt flexibel einstellbar sein, z.B. um den Abstand bzw. die Abstände während der Herstellung einer Teigware zu verändern.

Gemäß einem weiteren Aspekt der vorliegenden Erfindung weist die Teigverteilungsvorrichtung eine Mehrzahl von Luftdüsenvorrichtungen auf, welche in Querrichtung der Bratfläche nebeneinander angeordnet sind. Hierdurch kann dieselbe Teigmenge großflächiger und bzw. oder schneller verteilt werden als durch lediglich eine Teigverteilungsvorrichtung. Auch können mehrere Teigmengen durch mehrere Teigverteilungsvorrichtungen jeweils einzeln und zeitgleich verteilt werden, was die parallele Produktion mehrerer Teigwaren ermöglichen kann.

Die vorliegende Erfindung betrifft auch eine Bratanlage zum Braten von Teigmengen mit wenigstens einer beweglichen Bratfläche zum Braten der Teigmenge, wenigstens einer Teigaufgabevorrichtung zum Aufgeben einer vorbestimmten Teigmenge auf die Bratfläche und wenigstens einer Teigverteilungsvorrichtung zum flächigen Verteilen der Teigmenge auf der Bratfläche mittels eines Luftstroms wie zuvor beschrieben, wobei vorzugsweise die Teigverteilungsvorrichtung mit der Bratfläche zumindest abschnittsweise mitbeweglich ist. Auf diese Weise können die Vorteile der erfindungsgemäßen Teigverteilungsvorrichtung bei einer entsprechenden Bratanlage genutzt werden.

Die Teigverteilungsvorrichtung mit der Bratfläche zumindest abschnittsweise, d.h. für eine vorbestimmte Zeitdauer, mitfahren zu lassen kann den Vorteil haben, eine Teigmenge, welche auf die Bratfläche aufgebracht wurde und sich nun mit dieser mitbewegt, länger bearbeiten, d.h. verteilen, zu können als dies der Fall wäre, falls die Teigverteilungsvorrichtung stationär gegenüber der sich bewegenden Bratfläche angeordnet wäre. Vorzugsweise kann sich die Teigverteilungsvorrichtung mit der Bratfläche mit der gleichen Geschwindigkeit mitfahrend bewegen, so dass keine Relativgeschwindigkeit zwischen der Bratfläche und damit auch mit der dort aufgegebenen Teigmenge und der Teigverteilungsvorrichtung auftritt. Auf diese Weise kann die Teigverteilungsvorrichtung die Teigmenge auf der Bratfläche genau so bearbeiten, d.h. verteilen, als wenn die Bratfläche stillstehen würde.

Vorzugsweise kann sich die Teigverteilungsvorrichtung nach der abgeschlossenen Verteilung einer Teigmenge zu einer Teigware wieder zurück in eine Ausgangsposition bewegen, um eine weitere Teigmenge, vorzugsweise in der Produktionsabfolge die nächste Teigmenge, verteilen zu können. Vorzugsweise finde diese Rückbewegung der Teigverteilungsvorrichtung im Wesentlichen, vorzugsweise direkt, in entgegengesetzte Richtung zur Bewegungsrichtung der Bratfläche statt. Hierdurch kann der Aufwand der Rückbewegung möglichst gering gehalten werden. Vorzugsweise wird die Druckluft während dieser Rückbewegung wenigstens reduziert, vorzugsweise vollständig angehalten, um Energie zu sparen.

Dabei kann die Bewegung der Teigverteilungsvorrichtung gegenüber der sich bewegenden Bratfläche geradlinig, bogenförmig, oval, teilkreisförmig etc. sein, je nachdem, wie es bei der jeweiligen Bratanlage erforderlich ist, um die Verteilung der Teigmenge auf der Bratfläche durchzuführen. Vorzugsweise ist die Bratfläche ringförmig ausgebildet, so dass die Bratfläche endlos geschlossen ist.

Gemäß einem weiteren Aspekt der vorliegenden Erfindung ist die Teigaufgabevorrichtung ein Kolbenportionierer bzw. weist einen Kolbenportionierer auf, wobei vorzugsweise der Kolbenportionierer eine Mehrzahl von Portionieröffnungen aufweist, welche gemeinsam die zu verteilende Teigmenge auf die Bratfläche aufgeben können. Vorteilhaft ist hierbei, dass mittels eines Kolbenportionierers die zu verteilende Teigmenge hochgenau, z.B. auf ein Gramm genau, portioniert und aufgegeben werden kann. Hierdurch kann ein sehr konstantes Ergebnis z.B. hinsichtlich Gewicht und bzw. oder Abmaße der Teigwaren wie z.B. von Crepes, Blinis etc. erreicht werden. Den Portionierer vorzugsweise mit vielen kleinen Öffnungen zur Teigabgaben zu versehen kann den Vorteil haben, dass hierdurch die gewünschte Teigmenge schnell und gleichzeitig mit einer gewissen flächigen Verteilung auf die Bratfläche aufgegeben werden kann, die grundsätzlich bereits der Art der zu erreichenden Teigverteilung entsprechen kann. Beispielsweise kann ein runder Portionierkopf bereits eine runde Teigmenge auf die Bratfläche aufgeben, die dann mittels der Teigverteilungsvorrichtung radial weiter ausgebreitet und damit gleichzeitig in der Höhe reduziert werden kann, so dass schnell und einfach eine dünne runde Teigware hergestellt werden kann.

Die vorliegenden Erfindung betrifft auch ein Verfahren zum flächigen Verteilen einer Teigmenge auf einer Bratfläche einer Bratanlage wie zuvor beschrieben mit den Schritten:
- Aufgeben einer vorbestimmten Teigmenge auf die Bratfläche, und
- flächiges Verteilen der Teigmenge auf der Bratfläche mittels eines Luftstroms, wobei vorzugsweise das flächige Verteilen der Teilmenge auf der Bratfläche zumindest abschnittsweise mitbeweglich mit der sich bewegenden Bratfläche erfolgen kann.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung einer Bratanlage mit einer erfindungsgemäßen Teigverteilungsvorrichtung;
- Fig. 2: eine perspektivische schematische Detailansicht der Bratanlage der Fig. 1;
- Fig. 3: eine perspektivische schematische Darstellung einer erfindungsgemäßen Teigverteilungsvorrichtung;
- Fig. 4: eine perspektivische schematische Darstellung einer Luftdüsenvorrichtung der erfindungsgemäßen Teigverteilungsvorrichtung der Fig. 3;
- Fig. 5: eine schematische seitliche Darstellung einer ersten Luftdüse der Luftdüsenvorrichtung der Fig. 4; und
- Fig. 6: eine schematische Draufsicht auf die Luftdüsenvorrichtung der Fig. 4.

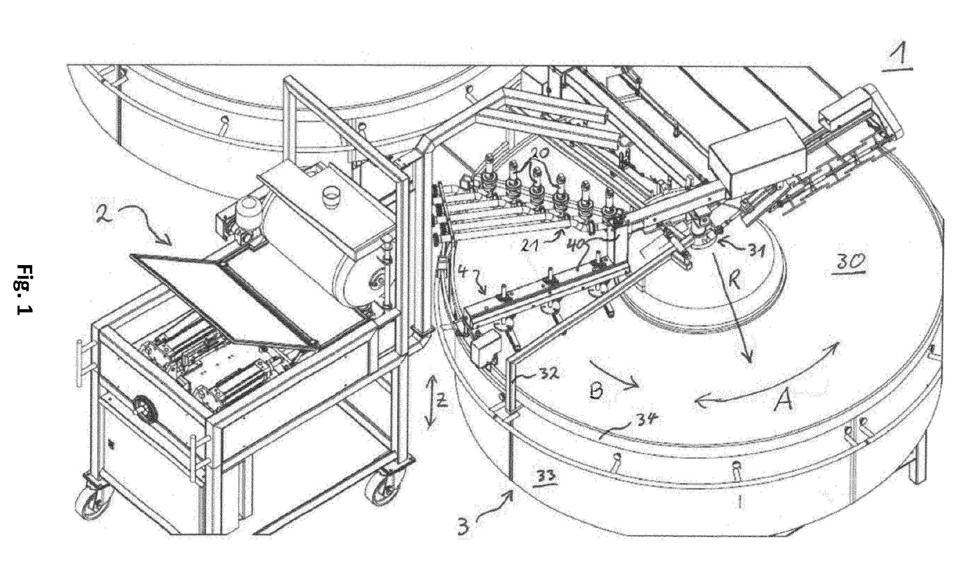

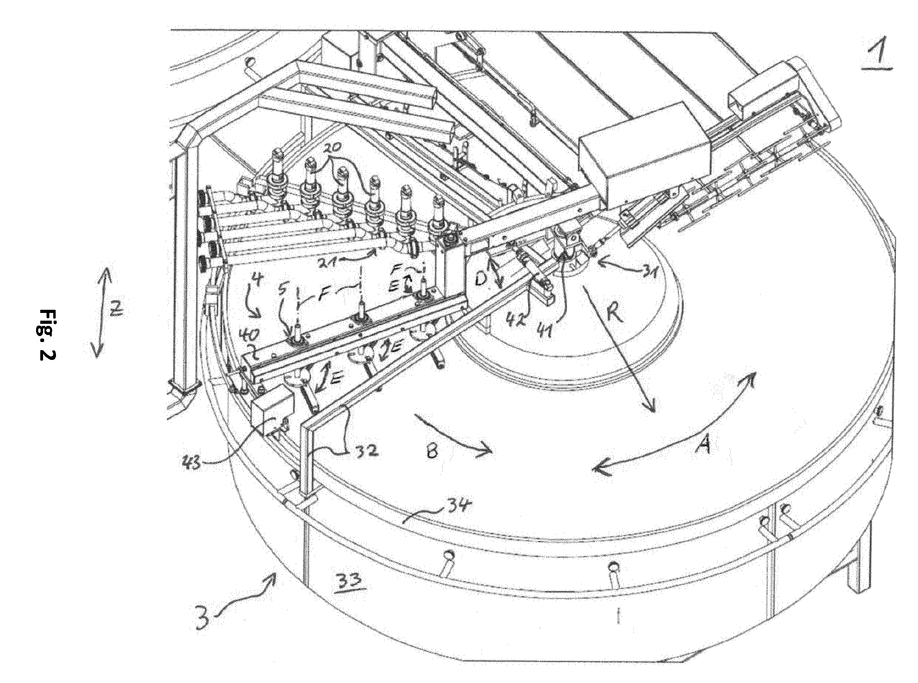

Fig. 1 zeigt eine Bratanlage 1, welche eine Teigbereitstellungseinrichtung 2, eine Bratvorrichtung 3 und eine Teigverteilungsvorrichtung 4 aufweist, vgl. z.B. Fig. 1, 2. Die Bratvorrichtung 3 weist eine gusseiserne Bratfläche 30 auf, welche in einer Umfangsrichtung A ringförmig geschlossen ausgebildet ist und von unten mittels Gasflammen beheizt werden kann. Die Bratfläche 30 kann in einer Bewegungsrichtung B bzw. Drehrichtung B bewegt werden, um sich mit einer konstanten Geschwindigkeit um eine Drehachse C zu bewegen. Von der Drehachse C erstreckt sich die radiale Richtung R weg.

Die Bratvorrichtung 3 weist axial zur Drehachse C angeordnet ein axiales Anschlusselement 31 auf, welches sich in der Höhe Z oberhalb der Bratfläche 30 erstreckt. Über das axiale Anschlusselement 31 ist ein radiales Anschlusselement 32 mit der radialen Außenseite 33 der Bratvorrichtung 3 feststehend verbunden. Das radiale Anschlusselement 32 bildet auf diese Weise einen im Wesentlichen radial geradlinig ausgebildeten Rahmen 32, welcher oberhalb der Bratfläche 30 angeordnet ist. An der radialen Außenseite 33 ist ferner in der Höhe Z nach oben eine Schiene 34 vorgesehen, welche die Bratfläche 30 in der Höhe Z überragt und radial außerhalb umschließt.

Entgegen der Drehrichtung B der Bratfläche 30 sind in Umfangsrichtung A versetzt zum radialen Anschlusselement 30 mehrere Teigaufgabevorrichtungen 20 in Form von Kolbenportionierern 20 in der Höhe Z oberhalb der Bratfläche 30 angeordnet, welche zur Teigbereitstellungseinrichtung 2 gehören. Portionieröffnungen 21 der Kolbenportionierer 20 weisen in der Höhe Z nach unten zur Bratfläche 30 hin, so dass durch die Kolbenportionierer 20 mehrere vorbestimmte Teigmengen auf die Bratfläche 30 aufgegeben werden können, die sich dann mit der Bratfläche 30 in der Drehrichtung B mitbewegen können.

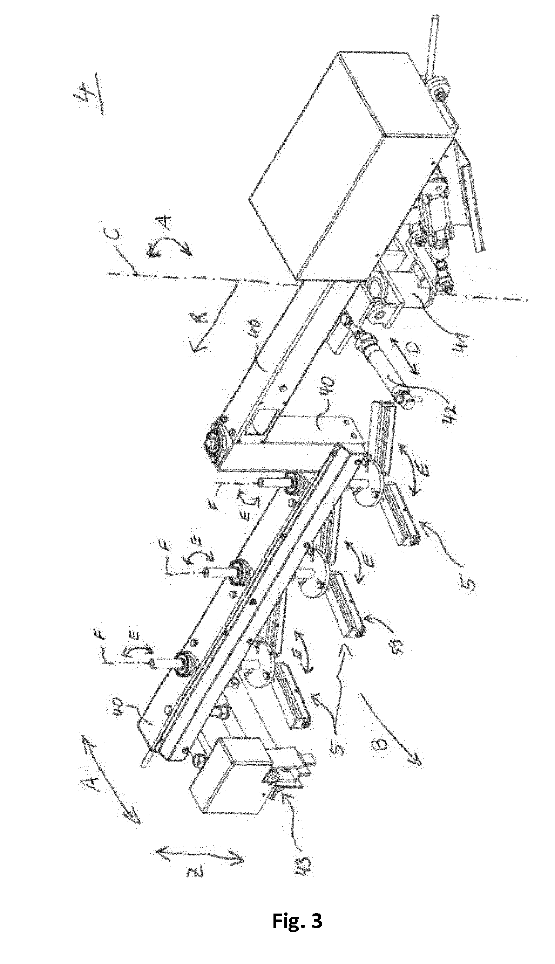

In Umfangsrichtung A zwischen den Kolbenportionierern 20 und dem radialen Anschlusselement 32 ist die erfindungsgemäße Teigverteilungsvorrichtung 4 angeordnet. Die Teigverteilungsvorrichtung 4 weist ein Gestell 40 auf, welches sich im Wesentlichen radial von der Drehachse C der Bratvorrichtung 3 zu dessen Außenseite 33 bzw. Schiene 34 erstreckt und damit im Wesentlichen parallel zum radialen Anschlusselement 32 verläuft, vgl. z.B. Fig. 2, 3. Das Gestell 40 ist axial zur Drehachse C oberhalb des axialen Anschlusselements 31 der Bratvorrichtung 3 mittels eines axialen Anschlusselements 41 der Teigverteilungsvorrichtung 4 um die Drehachse C drehbar mit der feststehenden Bratvorrichtung 3 verbunden. Im radial äußeren Bereich ist das Gestell 40 mittels einer Schienenführung 43 mit der Schiene 34 der Bratvorrichtung 3 verbunden, wobei die Schienenführung 43 auf der Schiene 34 in Umfangsrichtung A beweglich angeordnet ist.

Zwischen dem radialen Anschlusselement 31 der feststehenden Bratvorrichtung 3 und dem Gestell 40 der Teigverteilungsvorrichtung 4 ist ein Kolbenelement 42 derart angeordnet, so dass das Kolbenelement 42 einen Kolbenhub in eine Hubrichtung D ausführen kann. Auf diese Weise kann die Teigverteilungsvorrichtung 4 bzw. deren Gestell 40 gegenüber der Bratvorrichtung 3 in der Höhe Z oberhalb der Bratfläche 30 in Umfangsrichtung A über einen gewissen Bereich kreisförmig mit der Bratfläche 30 mitgeführt werden. Dabei kann die Geschwindigkeit der Bewegung der Teigverteilungsvorrichtung 4 der Geschwindigkeit der Bratfläche 30 in Bewegungsrichtung B angepasst werden, so dass sich beide mit derselben Geschwindigkeit über diesen Bereich bewegen können, d.h. ohne Relativgeschwindigkeit zueinander.

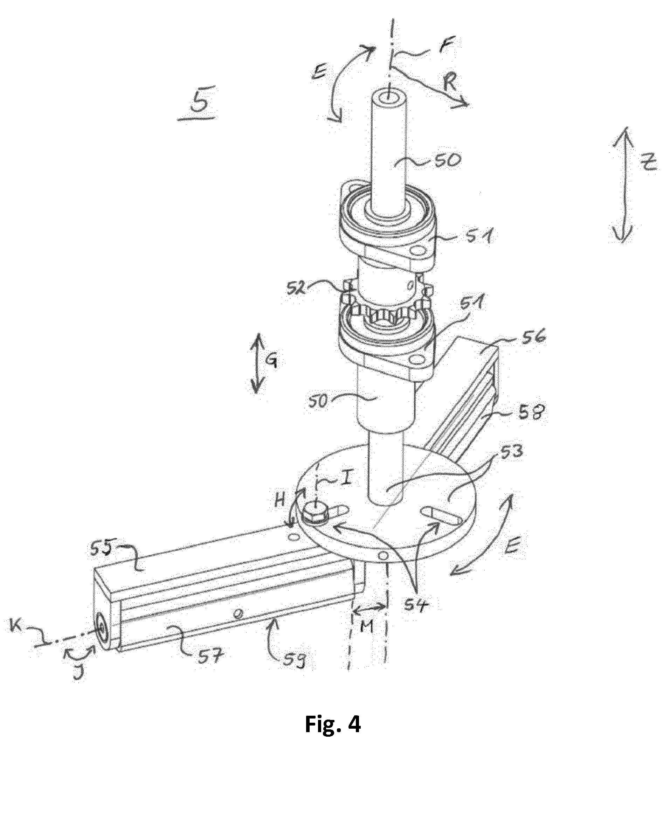

Die Teigverteilungsvorrichtung 4 weist drei Luftdüsenvorrichtungen 5 auf, vgl. z.B. Fig. 3. Die Luftdüsenvorrichtungen 5 sind radial zueinander versetzt nebeneinander am Gestell 40 der Teigverteilungsvorrichtung 4 um eine Drehachse F in einer Drehrichtung E drehbar angeordnet. Jede Luftdüsenhalterung 5 weist eine obere zylindrische Halterung 50 auf, vgl. z.B. Fig. 4. Die oberer Halterung 50 ist mittels zweier Befestigungsmittel 51 am Gestell 40 um die Drehachse F drehbar angeordnet. Die Drehung in die Drehrichtung E kann mittels eines gemeinsamen Antriebs (nicht dargestellt) aller drei Luftdüsenvorrichtungen 5 oder jeweils eines einzelnen Antriebs (nicht dargestellt) jeder Luftdüsenvorrichtung 5 über jeweils ein Antriebsmittel 52 in Form eines Zahnkranzes 52 erreicht werden. Die Drehrichtung E kann ebenso wie die Drehgeschwindigkeit eingestellt werden.

In der Höhe Z im unteren Bereich weist die Luftdüsenvorrichtung 5 eine untere zylindrische Halterung 53 auf, welche mit der oberen Halterung 50 in der Höhe Z als Höhenverstellungsrichtung G zueinander verstellbar angeordnet ist. Dabei kann die Höheneinstellung der unteren Halterung 53 gegenüber der oberen Halterung 50 stufenlos vorgenommen werden. Hierzu kann die untere Halterung 53 in der oberen Halterung 50 aufgenommen und dort mittels einer Schraubverbindung (nicht dargestellt) gehalten werden.

Im in der Höhe Z unteren Bereich weist die untere Halterung 53 eine kreisförmige Scheibe auf, in der drei in Drehrichtung E gleichmäßig zueinander beabstandete Luftdüsenrahmenhalterungen 54 in Form von Schraubverbindungen mit sich radial erstreckenden Langlöchern angeordnet bzw. ausgebildet sind. Über eine Luftdüsenrahmenhalterung 54 ist ein erster Luftdüsenrahmen 55 mit erster Luftdüse 57 und über eine weitere Luftdüsenrahmenhalterung 54 ein zweiter Luftdüsenrahmen 56 mit zweiter Luftdüse 58 an der unteren Halterung 53 angeordnet. Die dritte Luftdüsenrahmenhalterung 54 weist keinen Luftdüsenrahmen 55 auf, kann jedoch mit einem Luftdüsenrahmen 55 versehen werden.

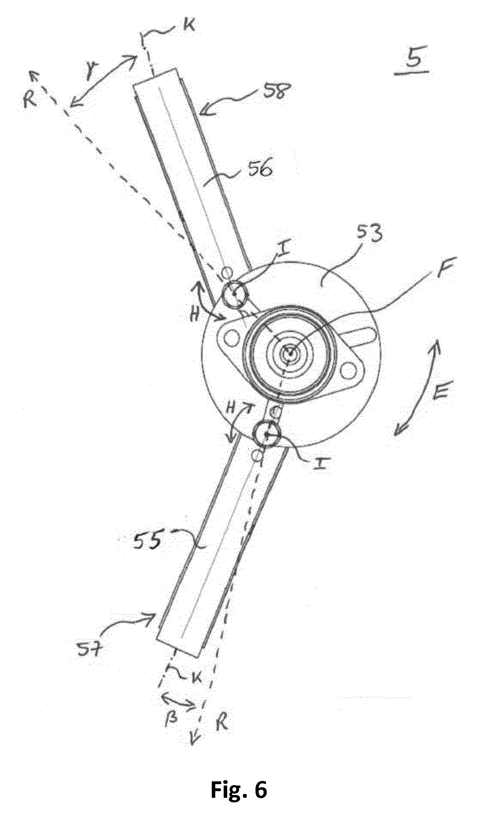

Mittels den Luftdüsenrahmenhalterungen 54 können die jeweiligen Luftdüsenrahmen 55, 56 gegenüber der unteren Halterung 53 in zweierlei Hinsicht eingestellt werden. Zum einen wird durch die Schraubverbindung der Luftdüsenrahmenhalterungen 54 jeweils eine Drehachse I gebildet, um die der jeweilige Luftdüsenrahmen 55, 56 in einer Drehrichtung H orientiert und in dieser Stellung festgeschraubt werden kann. Hierdurch können beide Luftdüsenrahmen 55, 56 gegenüber der radialen Richtung R der Drehachse F der jeweiligen Luftdüsenvorrichtung 5 gedreht werden, und zwar der erste Luftdüsenrahmen 55 um einen Winkel β und der zweite Luftdüsenrahmen 56 um einen Winkel γ, vgl. z.B. Fig. 6. Zum anderen kann die Schraubverbindung der Luftdüsenrahmenhalterung 54 jeweils innerhalb des entsprechenden Langlochs radial versetzt werden, wodurch sich der im Wesentlichen radiale Abstand M des jeweiligen Luftdüsenrahmens 55, 56 bzw. der jeweiligen Luftdüse 57, 58 zur Drehachse F der Luftdüsenvorrichtung 5 in einem gewissen Maße einstellen lässt, vgl. z.B. Fig. 4.

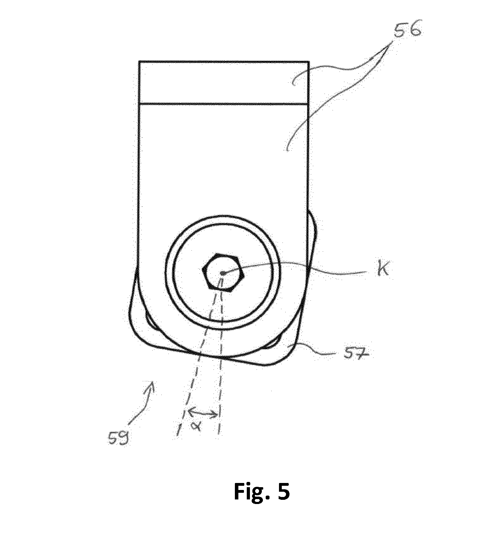

Die beiden Luftdüsenrahmen 55, 56 weisen jeweils eine Luftdüse 57, 58 auf, welche jeweils eine schlitzartige Luftaustrittsöffnung 59 aufweist, die sich in der Längsrichtung der jeweiligen Luftdüse 57, 58 erstreckt. Die Luftdüsen 57, 58 sind jeweils um eine Drehachse K in einer Drehrichtung J gegenüber dem Luftdüsenrahmen 55, 56 um einen Winkel α geneigt mittels einer Schraubverbindung einstellbar, vgl. z.B. Fig. 5. Hierdurch kann die jeweilige Luftdüse 57, 58 in die Drehrichtung E der Luftdüsenvorrichtung 5 geneigt angeordnet werden.

Erfindungsgemäß kann die Bratanlage 1 derart betrieben werden, dass drei zu verteilende Teigmengen (nicht dargestellt) radial nebeneinander durch die Kolbenportionierer 20 in der Höhe Z von oben auf eine Stelle der Bratfläche 30 aufgegeben werden. Diese drei Teigmengen werden dann mit der Bratfläche 30 mit in deren Drehrichtung B bewegt und gelangen so unter die drei Luftdüsenvorrichtungen 5 der Teigverteilungsvorrichtung 4. Dabei sind die Kolbenportionierer 20 derart angeordnet, dass die Teigmengen in radialer Richtung R so auf die Bratfläche 30 aufgegeben werden, dass die Teigmengen bei der Bewegung der Bratfläche 30 in Umfangsrichtung A mittig unter der jeweiligen Luftdüsenvorrichtung 5 ankommen.

Erreichen die drei Teigmengen die Luftdüsenvorrichtungen 5, wird die Teigverteilungsvorrichtung 4 mittels der Hubbewegung des Kolbenelements 42 mit der gleichen Geschwindigkeit mit den Teigmengen mitbewegt wie diese durch die Bratfläche 30 erfahren. Dabei drehen sich die Luftdüsenvorrichtungen 5 bereits mit konstanter Geschwindigkeit in Drehrichtung E um ihre Drehachsen F. Die Luftdüsen 57, 58 sind zwecks Energieersparnis bisher ausgeschaltet gewesen und erhalten nun Druckluft mit einem vorgegeben Druck, so dass über die Luftaustrittsöffnungen 59 jeweils ein Luftstrom gebildet wird, der im Wesentlichen in der Höhe Z nach unten zur Bratfläche 30 hin zeigt. Durch diese beiden Luftströme der Luftdüsen 57, 58 und die gemeinsame Rotation der Luftdüsen 57, 58 um die Drehachse F wird die jeweilige Teigmenge wie mit einem Verteilspachtel auf der Bratfläche dünn und kreisförmig verteilt, während der Teig durch die Wärme der Bratfläche 30 in der Höhe Z von unten gebraten wird. Ist die Teigverteilung abgeschlossen, so wird der Luftstrom angehalten und die Teigverteilungsvorrichtung 4 wieder in der Umfangsrichtung A der Bratfläche 30 entgegen deren Drehrichtung B zurück in die Ausgangsposition bewegt, um die nächsten drei Teigmengen verteilen zu können.

Dabei kann die Höheneinstellung G der Luftdüsen 57, 58 gegenüber der Bratfläche 30, die Stärke der Druckluft der Luftdüsen 57, 58, der jeweilige Schwenkwinkel β, γ der Luftdüsen 57, 58 gegenüber der Drehachse F der Luftdüsenvorrichtung 5, der jeweilige Neigungswinkel α der Luftdüsen 57, 58 gegenüber den Luftdüsenrahmen 55, 56 sowie der radiale Abstand M der Luftdüsen 57, 58 gegenüber der Drehachse F der Luftdüsenvorrichtung 5 derart gewählt werden, dass eine möglichst gleichmäßige, runde und dünne Teigware wie z.B. ein Crepes oder ein Blini automatisiert gebraten werden kann. Dies kann erfindungsgemäß durch den Einsatz eines Luftstroms als Verteilspachtel berührungslos gegenüber der zu verteilenden Teigmenge geschehen, was den Reinigungsaufwand der Luftdüsenvorrichtungen 5 sehr gering halten kann.

### BEZUGSZEICHENLISTE (Teil der Beschreibung)

- A: Umfangsrichtung der Bratfläche 30
- B: Bewegungsrichtung bzw. Drehrichtung der Bratfläche 30
- C: Drehachse der Bratfläche 30

- D: Hubrichtung des Kolbenelements 42

- E: Drehrichtungen der Luftdüsenvorrichtungen 5
- F: Drehachsen der Luftdüsenvorrichtungen 5
- G: Höhenverstellungsrichtungen der Luftdüsenvorrichtungen 5

- H: Drehrichtungen der Luftdüsenrahmenhalterungen 54
- I: Drehachsen der Luftdüsenrahmenhalterungen 54

- J: Drehrichtungen der Luftdüsen 57, 58 gegenüber den Luftdüsenrahmen 55, 56
- K: Drehachsen der Luftdüsen 57, 58 gegenüber den Luftdüsenrahmen 55, 56
- M: radialer Abstand der Luftdüsen 57, 58 zur Drehachse F der Teigverteilungsvorrichtung 4

- α: Neigungswinkel der Luftdüsen 57, 58 gegenüber den Luftdüsenrahmen 55, 56um Drehachse K
- β: Schwenkwinkel der ersten Luftdüse 57 um Drehachse I des ersten Luftdüsenrahmens 55
- γ: Schwenkwinkel der zweiten Luftdüse 58 um Drehachse I des zweiten Luftdüsenrahmens 56

- R: radiale Richtungen der Hochachsen bzw. Drehachsen C, F

- Z: Höhe
- 1: Bratanlage

- 2: Teigbereitstellungseinrichtung
- 20: Teigaufgabevorrichtungen, Teigportionierer, Kolbenportionierer
- 21: Portionieröffnungen der Teigaufgabevorrichtungen 20

- 3: Bratvorrichtung
- 30: Bratfläche
- 31: axiales Anschlusselement
- 32: radiales Anschlusselement, Rahmen, Gestell
- 33: Außenseite der Bratvorrichtung 3
- 34: Schiene in Umfangsrichtung A

- 4: Teigverteilungsvorrichtung
- 40: Gestell
- 41: axiales Anschlusselement
- 42: Kolbenelement
- 43: Schienenführung

- 5: Luftdüsenvorrichtungen
- 50: obere Halterung
- 51: Befestigungsmitteln
- 52: Antriebsmittel, Zahnkranz
- 53: untere Halterung
- 54: Luftdüsenrahmenhalterungen, Schraubverbindungen mit Langloch
- 55: erster Luftdüsenrahmen
- 56: zweiter Luftdüsenrahmen
- 57: erste Luftdüse
- 58: zweite Luftdüse
- 59: Luftaustrittsöffnungen

## Patentansprüche

1. Teigverteilungsvorrichtung (4) zum flächigen Verteilen einer Teigmenge auf einer Bratfläche (30), mit
wenigstens einer Luftdüsenvorrichtung (5), mit
wenigstens einer ersten Luftdüse (57), welche auf die zu verteilende Teigmenge hin ausgerichtet werden und die zu verteilende Teigmenge mittels eines Luftstroms flächig auf der Bratfläche (30) verteilen kann,
**dadurch gekennzeichnet, dass**
die erste Luftdüse (57) gegenüber einem Gestell (40) der Teigverteilungsvorrichtung (4) um eine Drehachse (F) drehbar derart bewegt werden kann, so dass die zu verteilende Teigmenge mittels der ersten Luftdüse (57) rundflächig auf der Bratfläche (30) verteilt werden kann.

2. Teigverteilungsvorrichtung (4) gemäß Anspruch 1,
wobei die erste Luftdüse (57) derart angeordnet, ausgerichtet und/oder eingestellt werden kann, dass die Wirkung der Druckluft der ersten Luftdüse (57) über die Drehachse (F) der Luftdüsenvorrichtung (5) im Wesentlichen radial hinausgehen kann.

3. Teigverteilungsvorrichtung (4) gemäß einem der vorherigen Ansprüche,
wobei die Stärke des Luftdrucks der ersten Luftdüse (57) einstellbar ist.

4. Teigverteilungsvorrichtung (4) gemäß einem der vorherigen Ansprüche,
wobei die erste Luftdüse (57) gegenüber der Bratfläche (3) in der Höhe (Z) einstellbar ist.

5. Teigverteilungsvorrichtung (4) gemäß einem der vorherigen Ansprüche,
wobei die erste Luftdüse (57) gegenüber der Bratfläche (3) um einen Winkel (α) geneigt einstellbar ist.

6. Teigverteilungsvorrichtung (4) gemäß einem der vorherigen Ansprüche,
wobei die erste Luftdüse (57) eine Mehrzahl von Luftaustrittsöffnungen (58) aufweist.

7. Teigverteilungsvorrichtung (4) gemäß einem der vorherigen Ansprüche,
wobei die erste Luftdüse (57) wenigstens eine schlitzartig ausgebildete Luftaustrittsöffnung (58) aufweist.

8. Teigverteilungsvorrichtung (4) gemäß einem der vorherigen Ansprüche,
wobei die Luftdüsenvorrichtung (5) wenigstens eine zweite Luftdüse (58) aufweist, wobei die erste Luftdüse (57) und die zweite Luftdüse (58) identisch oder unterschiedlich angeordnet, ausgestaltet und/oder einstellbar sein können.

9. Teigverteilungsvorrichtung (4) gemäß einem der vorherigen Ansprüche,
wobei die erste Luftdüse (57) und/oder die zweite Luftdüse (58) gegenüber der radialen Richtung (R) der Drehachse (F) der Luftdüsenvorrichtung (5) um einen Winkel (β, γ) gedreht einstellbar ist/sind.

10. Teigverteilungsvorrichtung (4) gemäß einem der vorherigen Ansprüche,
wobei die erste Luftdüse (57) und/oder die zweite Luftdüse (58) im radialen Abstand (M) gegenüber der Drehachse (F) der Luftdüsenvorrichtung (5) einstellbar ist/sind.

11. Teigverteilungsvorrichtung (4) gemäß einem der vorherigen Ansprüche, mit einer Mehrzahl von Luftdüsenvorrichtungen (5), welche in Querrichtung (Y) der Bratfläche (30) nebeneinander angeordnet sind.

12. Bratanlage (1) zum Braten von Teigmengen, mit
wenigstens einer beweglichen Bratfläche (30) zum Braten der Teigmenge, wenigstens einer Teigaufgabevorrichtung (20) zum Aufgeben einer vorbestimmten Teigmenge auf die Bratfläche (30), und
wenigstens einer Teigverteilungsvorrichtung (4) zum flächigen Verteilen der Teigmenge auf der Bratfläche (30) mittels eines Luftstroms gemäß einem der vorherigen Ansprüche,
wobei vorzugsweise die Teigverteilungsvorrichtung (4) mit der Bratfläche (30) zumindest abschnittsweise mitbeweglich ist.

13. Bratanlage (1) gemäß Anspruch 12,
wobei die Teigaufgabevorrichtung (20) ein Kolbenportionierer (20) ist oder einen Kolbenportionierer (20) aufweist,
wobei vorzugsweise der Kolbenportionierer (20) eine Mehrzahl von Portionieröffnungen (21) aufweist, welche gemeinsam die zu verteilende Teigmenge auf die Bratfläche (30) aufgeben können.

14. Verfahren zum flächigen Verteilen einer Teigmenge auf einer Bratfläche (30) einer Bratanlage (1) gemäß einem der Ansprüche 12 oder 13, mit den Schritten:
Aufgeben einer vorbestimmten Teigmenge auf die Bratfläche (30), und
flächiges Verteilen der Teigmenge auf der Bratfläche (30) mittels eines Luftstroms, wobei vorzugsweise das flächige Verteilen der Teilmenge auf der Bratfläche (30) zumindest abschnittsweise mitbeweglich mit der sich bewegenden Bratfläche (30) erfolgen kann.
